# EUROPEAN PATENT SPECIFICATION

(11) **EP 3 202 083 B1**
(45) Date of publication and mention of the grant of the patent: **06.06.2018**
(21) Application number: 15767685.9
(22) Date of filing: 14.09.2015
(51) Int. Cl.: H04L 12/18

(54) **CONTENT DELIVERY METADATA EXCHANGE IN WIRELESS COMMUNICATION SYSTEMS**
INHALTSBEREITSTELLUNGSMETADATENAUSTAUSCH IN DRAHTLOSKOMMUNIKATIONSSYSTEMEN
ÉCHANGE DE MÉTADONNÉES DE DISTRIBUTION DE CONTENU DANS DES SYSTÈMES DE COMMUNICATIONS SANS FIL

(30) Priority: 29.09.2014 US 201414499851
(43) Date of publication of application: 09.08.2017
(73) Proprietor: Sprint Communications Company L.P., Overland Park, KS 66251-2100 (US)
(72) Inventor: BERTZ, Lyle T., Lee's Summit, Missouri 64086 (US)
(74) Representative: Smallman, Clint Guy
(86) International application number: PCT/US2015/049905
(87) International publication number: WO 2016/053603

(56) References cited:
- WO-A1-2014/132821
- US-A1- 2013 036 234

## Description

### TECHNICAL BACKGROUND

Content delivery networks transfer media content, such as video, audio, graphics, and data objects for delivery to various end-user devices. In many content delivery architectures, two content delivery networks are used - one for the content source and another that serves the content destination. These two content delivery networks exchange content delivery metadata for control, logging, prepositioning, inventory, and footprint discovery. The content delivery networks use the content delivery metadata to dynamically distribute media content from source to destination.

Some content delivery systems use File Delivery over Unidirectional Transport (FLUTE) to multicast data objects. In a FLUTE system, a content source transmits data objects to a channel associated with a Uniform Resource Indicator (URI) and a Transport Object Identifier (TOI). An end-user joins a desired FLUTE channel to receive a multicast of the desired data objects. The FLUTE content source also provides File Description Tables (FDTs) that list the URIs and TOIs for the various data objects. The FDTs also identify error correction data, file sizes, coding types, aggregate data rates, and the like.

Some content delivery systems use wireless communication networks to deliver media content to televisions, computers, and phones. Many of the wireless networks have enhanced Multimedia Broadcast Multicast Service (eMBMS) systems to wirelessly multicast high-consumption media content. The content delivery systems may use the wireless network eMBMS systems to deliver their media content. The eMBMS systems may also support FLUTE. Unfortunately, the content delivery metadata is not effective enough to handle eMBMS/FLUTE multicasting in an efficient manner.

WO 2014/132821 discloses a content distribution system, in which it is determined whether or not to use multicast or broadcast distribution in the supply of content, and then control information pertaining to unicast distribution of the content is updated.

US 2013/036234 discloses a method and apparatus for wireless communication, in which the apparatus establishes a file delivery session with a server in a broadcast network for system information, and receives a plurality of metadata fragments in the file delivery session.

### TECHNICAL OVERVIEW

A wireless communication system receives device-hosted content delivery data structures that identify device-hosted media content. The wireless system transfers the data structures to a content distribution network. The wireless system receives network-hosted content delivery data structures from the content distribution network indicating network-hosted media content and the device-hosted media content. The network-hosted content delivery data structures indicate real-time data-rates for the network-hosted media content and the device-hosted media content. The wireless system receives the network-hosted media content and the device-hosted media content. The wireless system transfers the network-hosted content delivery data structures and multicasts the network-hosted media content and the device-hosted media content.

### DESCRIPTION OF THE DRAWINGS

Figures 1-2 illustrate a communication network to exchange content delivery metadata over a wireless communication system.
Figures 3-4 illustrate an LTE network to exchange FLUTE File Description Tables over eMBMS systems between user equipment and content delivery networks.
Figure 5 illustrates User Equipment to exchange FLUTE File Description Tables over eMBMS systems between user equipment and content delivery networks.
Figure 6 illustrates a broadcast multicast service center to exchange content delivery metadata between user equipment and content delivery networks.

### DETAILED DESCRIPTION

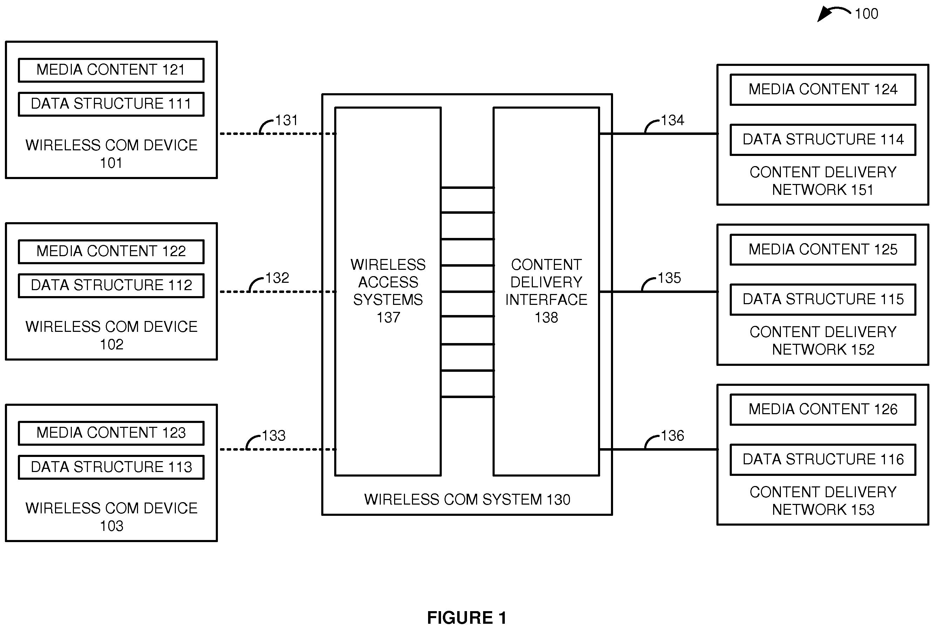

Figures 1-2 illustrate communication network 100 to exchange content delivery metadata over wireless communication system 130. Communication network 100 comprises wireless communication devices 101-103, wireless communication system 130, and content delivery networks 151-153. Wireless communication system 130 comprises wireless access systems 137 and content delivery interface 138 that are operationally coupled. Wireless communication devices 101-103 and wireless access systems 137 wirelessly communicate over respective wireless communication links 131-133. Content delivery interface 138 and content delivery networks 151-153 communicate over respective network communication links 134-136.

Wireless communication devices 101-103 comprise mobile phones, portable computers, media players, gaming consoles, televisions, set-top boxes and/or some other apparatus having access to a wireless communication transceiver. Wireless access systems 137 comprise Wireless Fidelity (Wifi) nodes, Long Term Evolution (LTE) equipment, Internet Protocol (IP) systems, and/or some other wireless network elements. Content delivery interface 138 comprises multicast gateways, broadcast service centers, mobility management systems, multicast coordination systems, IP routers, media servers, and/or some other media network elements. Content data networks 151-153 comprise media servers, databases, controllers, and/or some other media distribution systems.

In some examples, wireless communication devices 101-103 operate in a content-source role in a similar manner to content delivery networks 151-153. Also note that portions of wireless access systems 137 may reside on-site with wireless communication devices 101-103. Wireless communication links 111-113 use LTE, WiFi, and/or some other wireless communication protocol. Network communication links 114-117 use IP, Ethernet, Content Delivery Network Interface (CDNI) signaling, and/or some other data communication protocol.

Wireless communication devices 101-103 generate respective device-hosted content delivery data structures 111-113. Content delivery networks 151-153 generate respective network-hosted content delivery data structures 114-116. Content delivery data structures 111-116 associate media content files with access information. For example, content delivery data structure 114 may indicate popular television programs and associated access information, such as uniform resource indicators, IP addresses, transport object identifiers, and the like. Content delivery data structure 111 may indicate youth baseball highlights and associated access information.

Wireless communication devices 101-103 transfer respective device-hosted media content 121-123 to content delivery interface 138, although some of device-hosted media content 121-123 could be hosted in wireless communication devices 101-103 and/or wireless access systems 137. Content delivery networks 151-153 transfer respective network-hosted media content 124-126 to content delivery interface 138. Media content 121-126 comprises video, audio, graphics, data files, data objects, and/or some other block of data. For example, media content 122 might be a few songs and pictures while media content 123 might be a live video stream. Media content 152 might be a movie library where media content 125 comprises satellite and weather imagery.

In operation, wireless communication devices 101-103 transfer device-hosted content delivery data structures 111-113 to wireless access systems 137. Wireless access systems 137 transfer device-hosted content delivery data structures 111-113 to content delivery interface 138. Content delivery interface 138 aggregates and transfers device-hosted content delivery data structures 111-113 to one or more of content distribution networks 151-153. Content distribution networks 151-153 integrate at least portions of device-hosted content delivery data structures 111-113 into their own network-hosted content delivery data structures 114-116. As a result, at least some of device-hosted media content 121-123 and associated metadata in data structures 111-113 are described in network-hosted data structures 114-116. Content distribution networks 151-153 transfer network-hosted data structures 114-116 to content delivery interface 138 for subsequent transfer from wireless access systems 137.

Network-hosted data structures 114-116 indicate media content 121-126 and associated metadata. The metadata includes real-time data-transfer rates for media content 121-126. A real-time data-transfer rate indicates the data transfer speed that is required for real-time consumption of the associated media content. For example, the real-time data-transfer rate might indicate the network download speed that is required to properly view a live sporting event at high resolution. In some examples, device-hosted content delivery data structures 111-113 also indicate the real-time data-transfer rates for device-hosted media content 121-123. The real-time data-transfer rates can be used by wireless communication devices 101-103 to avoid content requests that are not supportable given current network conditions.

Content delivery networks 151-153 transfer media content 124-126 to content delivery interface 138 for subsequent multicast from wireless access systems 137. Typically, wireless communication devices 101-103 transfer some of device-hosted media content 121-123 to content delivery interface 138 for subsequent multicast from wireless access systems 137. In other examples, wireless communication devices 101-103 and/or wireless access systems 137 host some of device-hosted media content 121-123.

Content delivery interface 138 transfers network-hosted data structures 114-116 from wireless communication system 130 to wireless communication devices 101-103 (and other systems) over wireless access systems 137. Content delivery interface 138 then multicasts at least some of media content 121-126 over wireless access systems 137 to wireless communication devices 101-103 and other systems as well.

In some examples, network-hosted content delivery data structures 114-116 also identify media resource consumption indicators for media content 121-126. A media resource consumption indicator indicates the media processing resources required to handle the associated media content. For example, the media resource consumption indicators for a set of media content files might rank the media files (0, 1, 2, 3 ...) by their respective resource consumption. In some examples, device-hosted content delivery data structures 111-113 also indicate media resource consumption indicators for device-hosted media content 121-123. Wireless communication network 130 and/or wireless communication devices 101-103 may use the media resource consumption indicators for load balancing and resource allocation.

In some examples, network-hosted content delivery data structures 114-116 also identify content-source priority indicators for media content 121-126. A content-source priority indicator indicates the importance as assigned by the media content source. For example, the content-source priority indicators for a set of media content files might rank the media files (0, 1, 2, 3 ...) by their respective content-source priority. In some examples, device-hosted content delivery data structures 111-113 also indicate content-source priority indicators for device-hosted media content 121-123. Wireless communication network 130 and/or wireless communication devices 101-103 may use the content-source priority indicators for load balancing and resource allocation.

In some examples, network-hosted content delivery data structures 114-116 also identify data-transfer rates and associated rate-requirement indicators for media content 121-126. A data-transfer rate indicates a transfer speed for the media content while the rate-requirement indicator indicates if the data-transfer rate is required. For example, the data-transfer rate might indicate a speed to download a movie while the rate-requirement indicates that the content host will require the data-transfer rate for the download. In some examples, device-hosted content delivery data structures 111-113 also indicate data-transfer rates and associated rate-requirement indicators for device-hosted media content 121-123. The data-transfer rates and associated rate-requirement indicators can be used by wireless communication system 130 to avoid content requests that are not supportable given current network conditions.

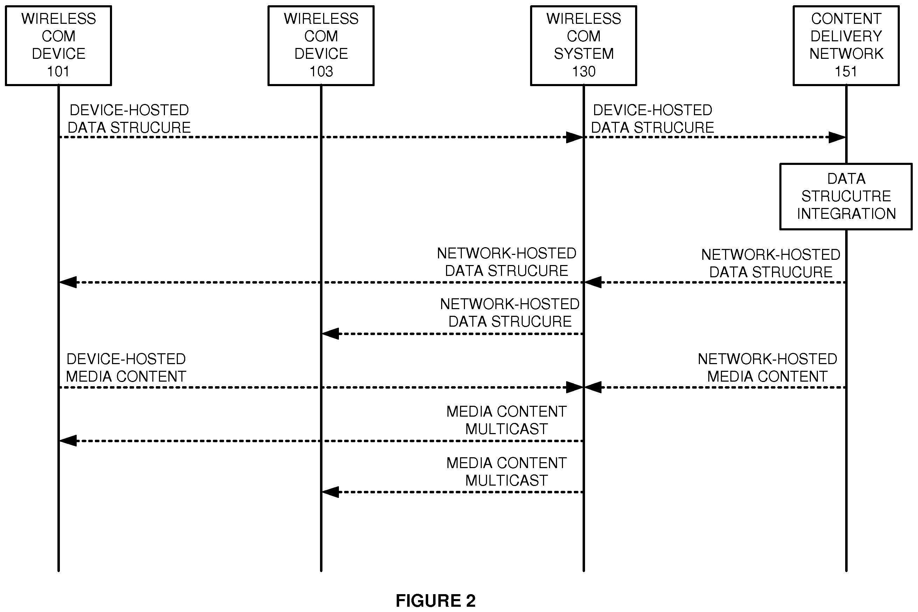

Referring to Figure 2, wireless communication device 101 transfers device-hosted content-delivery data structure 111 to wireless communication system 130. Wireless communication system 130 transfers device-hosted data structure 111 to content delivery network 151. Content-delivery data structure 111 lists media content 121 along with access information such as uniform resource indicators, IP addresses, transport object identifiers, and the like. Content-delivery data structure 111 may include footprint information, such as IP address translation and allocation data for device 101. Content-delivery data structure 111 may also include enhanced metrics such as: real-time data-transfer rate indicators, media resource consumption indicators, content-source priority indicators, data-transfer rates, and associated rate-requirement indicators.

Content delivery network 151 processes content-delivery data structure 111 and its own data to generate network-hosted content-delivery data structure 114. Network-hosted content-delivery data structure 114 lists media content 121 and media content 124 along with access information such as uniform resource indicators, IP addresses, transport object identifiers, and the like. Network-hosted content-delivery data structure 114 includes real-time data-transfer rate indicators for media content 121 and 124. Network-hosted content-delivery data structure 114 may also include enhanced metrics such as: media resource consumption indicators, content-source priority indicators, data-transfer rates, and associated rate-requirement indicators.

Content delivery network 151 transfers network-hosted content-delivery data structure 114 to wireless communication system 130. Wireless communication system 130 transfers network-hosted content-delivery data structure 114 to wireless communication devices 101-103. Content delivery network 151 transfers network-hosted media content 124 to wireless communication system 130. In this example, wireless communication device 101 transfers device-hosted media content 121 to wireless communication system 130, although device 101 could continue to host device-hosted media content 121. Wireless communication system 130 multicasts portions of media content 121 and 124 to wireless communication devices 101-103.

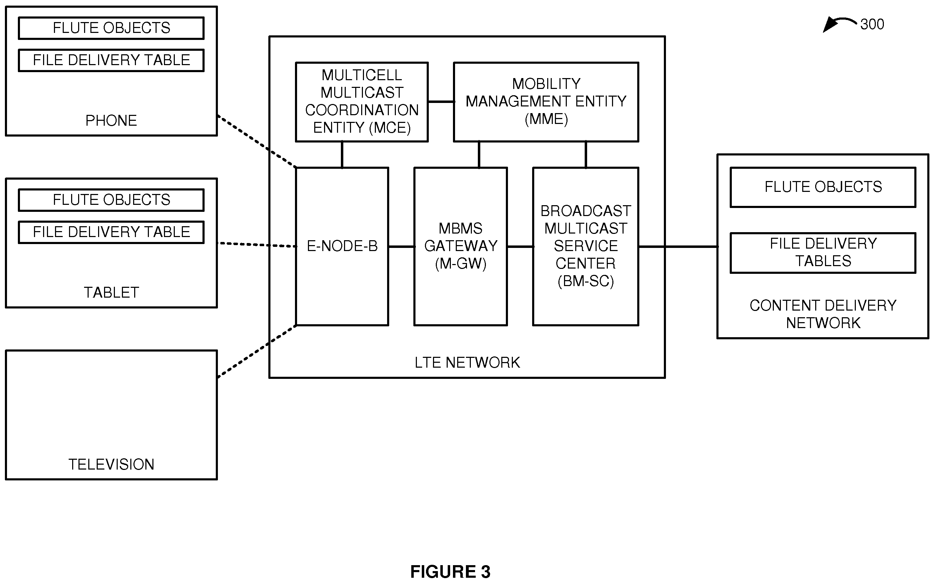

Figures 3-4 illustrate an LTE network to exchange File Transfer over Unidirectional Transport (FLUTE) File Description Tables (FDTs) over enhanced Multimedia Broadcast Multicast Service (eMBMS) systems between User Equipment (UE) and a Content Delivery Network (CDN). Communication network 300 comprises the LTE network, CDN, and various UEs that are represented by a phone, tablet, and television. The LTE network comprises an eNodeB, MBMS Gateway (M-GW), Broadcast Multicast Service Center (BM-SC), Multicell Multicast Coordination Entity (MCE), and Mobility Management Entity (MME). The number of UEs, eNodeBs, MCEs, and the like has been restricted for clarity on Figure 3.

The CDN and some of the UEs host FLUTE objects, such as video, audio, data files, software applications, and the like. The CDN and some of the UEs also host FLUTE File Delivery Tables (FDTs). The FLUTE FDTs include content delivery metadata for the FLUTE objects. The content delivery metadata comprises table instance data, uniform resource indicators, transport object identifiers, error correction data, file sizes, coding types, aggregate data rates, and the like. The FDTs in the phone and tablet may also list other metadata, such as their IP address translation and allocation data from their local network or the LTE network.

The phone, tablet, and television transfer individual eMBMS registrations to the M-GW to receive multicast service. The phone and the tablet transfer their FLUTE FDTs to the M-GW in the eMBMS registrations. The phone and the tablet also transfer their footprint data including IP address information in the eMBMS registrations - possibly as metadata in the FDTs. The M-GW transfers these FLUTE FDTs with the footprint data to the BM-SC, and the BM-SC transfers the FLUTE FDTs and footprint data to the CDN. The CDN integrates portions of the FLUTE FDTs and footprint data into its own FDTs. As a result, the FLUTE objects hosted by the phone and tablet are now characterized in the CDN FDTs.

The CDN transfers its FLUTE FDTs to the BM-SC. The CDN may use the footprint data to initiate the transfer of FLUTE objects from the tablet and phone to the BM-SC. The CDN transfers its own FLUTE objects to the BM-SC. The BM-SC transfers the FLUTE FDTS to registered systems including the phone, tablet, and television through the M-GW and eNodeB. The FLUTE FDTs indicate the available FLUTE objects and associated metadata. As various systems join the FLUTE channels listed in FDTs, the BM-SC multicasts (or unicasts) these FLUTE objects over the M-GW and eNodeB to the joining systems.

The metadata in the FLUTE FDTs includes real-time data-transfer rates for associated FLUTE objects. The real-time data-transfer rate indicates the data transfer speed between the BM-SC and the UE that is required for live consumption of the FLUTE object by the UE. For the FLUTE objects in the phone and tablet, the real-time data-transfer rates may be specified by the phone and tablet in their FDTs or may be set or changed by the CDN.

The metadata in the FLUTE FDTs includes media-resource consumption indicators for associated FLUTE objects. The media-resource consumption indicators rank the FLUTE objects in an FDT scope by the data processing resources that are consumed to handle the FLUTE object. For the FLUTE objects in the phone and tablet, the media-resource consumption indicators may be specified by the phone and tablet in their FDTs or may be set or changed by the CDN. The media-resource consumption indicators in the same FDT scope should not have the same rank. The media-resource consumption indicators may be used for scaling and load balancing.

The metadata in the FLUTE FDTs includes content-source priority indicators for associated FLUTE objects. The content-source priority indicators rank the FLUTE objects in an FDT scope by the importance attached to the FLUTE objects by the host. For the FLUTE objects in the phone and tablet, the content-source priority indicators may be specified by the phone and tablet in their FDTs or may be set or changed by the CDN. The content-source priority indicators in the same FDT scope should not have the same rank.

The metadata in the FLUTE FDTs includes data-transfer rates and associated rate-requirement indicators for associated FLUTE objects. The data-transfer rate indicates a suggested data transfer speed between the BM-SC and the UE for the FLUTE object. The rate-requirement indicator is a separate attribute to convert the suggested data-transfer rate into a session requirement for transfer of the FLUTE object. For the FLUTE objects in the phone and tablet, the data-transfer rates and associated rate-requirement indicators may be specified by the phone and tablet in their FDTs or may be set or changed by the CDN.

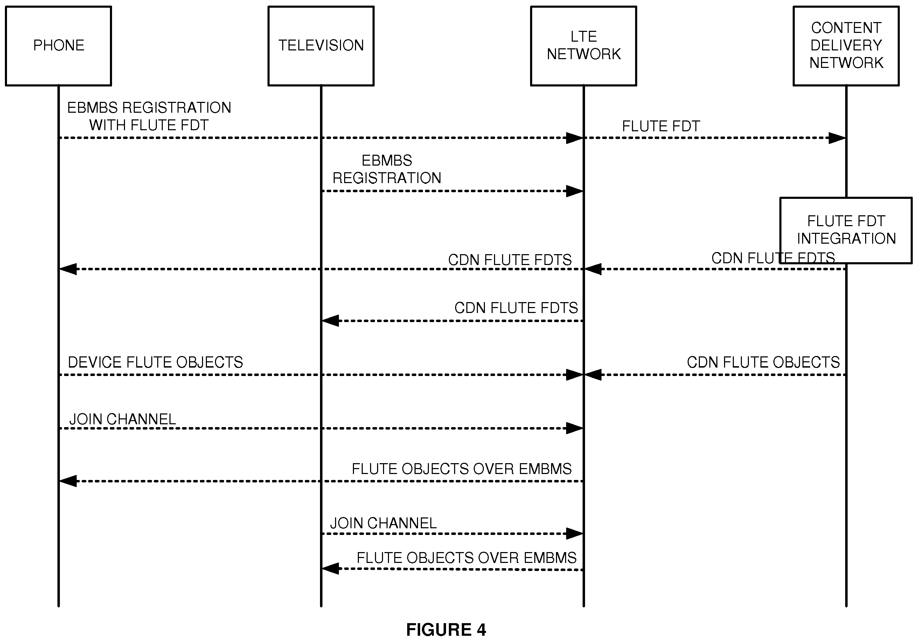

Referring to Figure 4, the phone transfers an eMBMS registration to the LTE network including its FLUTE FDT. The metadata in the FLUTE FDT includes a real-time data-transfer rate, media-resource consumption indicator, content-source priority indicator, data-transfer rate, and associated rate-requirement indicator for the FLUTE object. The phone also transfers its footprint data in the eMBMS registrations including IP address allocation and translation information from the LTE network. The television transfers an eMBMS registration to the LTE network.

The LTE network transfers the FLUTE FDT and footprint data from the phone to the CDN. The CDN integrates portions of the FLUTE FDT from the phone into its own FDTs. As a result, the FLUTE object hosted by the phone is listed in the CDN FDTs. The CDN transfers its FLUTE FDTs to the LTE network. The metadata in the FLUTE FDTs includes real-time data-transfer rates, media-resource consumption indicators, content-source priority indicators, data-transfer rates, and associated rate-requirement indicators for the FLUTE objects. The CDN transfers its FLUTE objects to the LTE network and initiates the transfer of the FLUTE object from the phone to the LTE network.

The LTE network transfers the FLUTE FDTS to the phone and television. The metadata in the FLUTE FDTs includes real-time data-transfer rates, media-resource consumption indicators, content-source priority indicators, data-transfer rates, and associated rate-requirement indicators for the FLUTE objects. When the phone joins a stream for a FLUTE object based on its received FDT, the LTE network multicasts (or unicasts) this FLUTE object to the phone. When the television joins the stream for the FLUTE object previously hosted by the phone, the LTE network multicasts (or unicasts) this FLUTE object to the television.

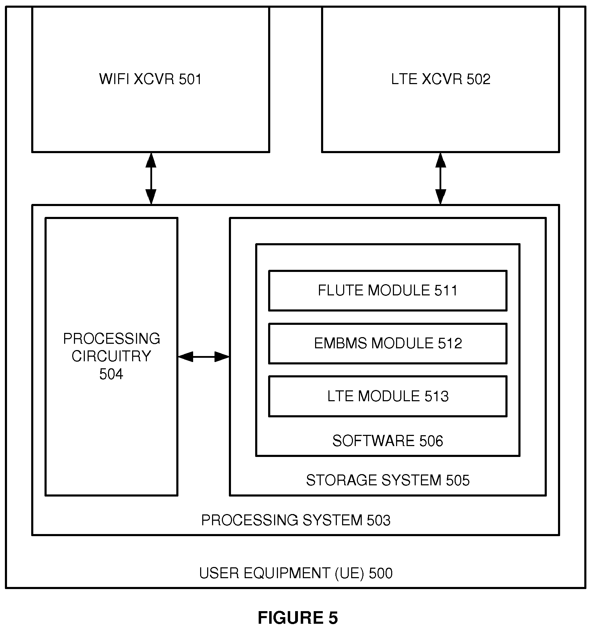

Figure 5 illustrates User Equipment (UE) 500 to exchange FLUTE File Description Tables (FDTs) over eMBMS systems. UE 500 is an example of wireless communication devices 101-103 and the UEs of Figure 3, although these devices may use alternative configurations and operations. UE 500 comprises Wifi transceiver 501, LTE transceiver 502, and processing system 503. Processing system 503 comprises processing circuitry 504 and storage system 505. Storage system 505 stores software 506. Software 506 includes software modules 511-513. Some conventional aspects of UE 500 are omitted for clarity, such as power supplies, enclosures, and the like. UE 500 may be centralized or distributed and may include various virtualized components.

Wifi transceiver 501 comprises wireless Wifi communication components, such as antennas, amplifiers, filters, modulators, and the like. LTE transceiver 502 comprises LTE communication components, such as such as antennas, amplifiers, filters, modulators, and the like. In processing system 503, processing circuitry 504 comprises circuit boards, integrated circuitry, and associated electronics. Storage system 505 comprises non-transitory, machine-readable, data storage media, such as flash drives, disc drives, memory circuitry, servers, and the like. Software 506 comprises machine-readable instructions that control the operation of processing circuitry 504 when executed. Software 506 includes software modules 511-513 and may also include operating systems, applications, data structures, utilities, databases, and the like. All or portions of software 506 may be externally stored on one or more storage media, such as flash drives, discs, servers, and the like.

When executed by processing circuitry 504, FLUTE module 511 directs circuitry 504 to generate FLUTE FDTs and FLUTE objects based on user control and media content inputs. FLUTE module 511 also directs circuitry 504 to receive and process FLUTE FDTs and FLUTE objects from other systems. When executed by processing circuitry 504, eMBMS module 512 directs circuitry 504 to transfer FLUTE FDTs in eMBMS signaling messages in addition to performing various other eMBMS services. When executed by processing circuitry 504 LTE module 513 directs circuitry 504 to attach and signal LTE networks to access their eMBMS systems.

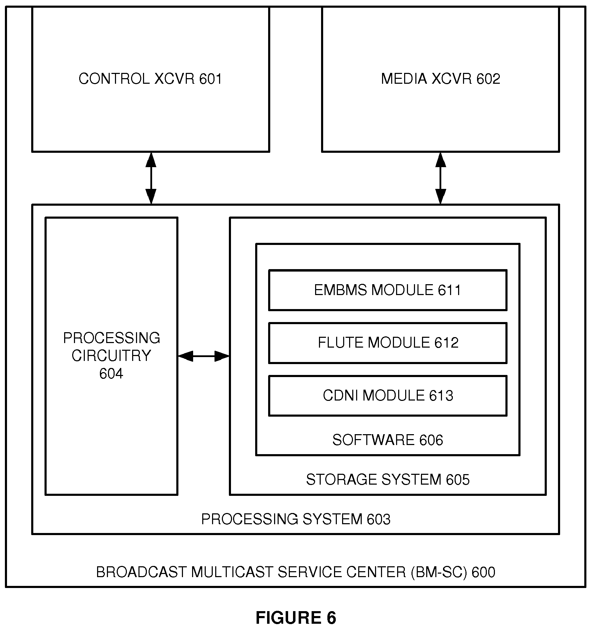

Figure 6 illustrates Broadcast Multicast Service Center (BM-SC) 600 to exchange content delivery metadata between user equipment and content delivery networks. BM-SC 600 is an example of content delivery interface 138 and the BM-SC of Figure 3, although these systems may use alternative configurations and operations. BM-SC 600 comprises control transceiver 601, media transceiver 602, and processing system 603. Processing system 603 comprises processing circuitry 604 and storage system 605. Storage system 605 stores software 606. Software 606 includes software modules 611-613. Some conventional aspects of BM-SC 600 are omitted for clarity, such as power supplies, enclosures, and the like. BM-SC 600 may be centralized or distributed and may include various virtualized components.

Control transceiver 601 comprises communication signaling components, such as ports, signal processors, software, and the like. Control transceiver 601 exchanges eMBMS signaling with multicast gateways. Control transceiver 601 exchanges LTE signaling with management entities. Control transceiver 601 exchanges CDNI signaling with CDNs. Media transceiver 602 comprises communication components, such as such as ports, signal processors, software, and the like. Media transceiver 602 receives media content from CDNs and transfers the media content to multicast gateways for distribution. Media transceiver 602 also receives media content from UEs.

In processing system 603, processing circuitry 604 comprises circuit boards, integrated circuitry, and associated electronics. Storage system 605 comprises non-transitory, machine-readable, data storage media, such as flash drives, tape drives, disc drives, memory circuitry, servers, and the like. Software 606 comprises machine-readable instructions that control the operation of processing circuitry 604 when executed. Software 606 includes software modules 611-613 and may also include operating systems, applications, data structures, utilities, databases, and the like. All or portions of software 606 may be externally stored on one or more storage media, such as flash drives, discs, servers, and the like.

When executed by processing circuitry 604, eMBMS module 611 directs circuitry 604 to exchange eMBMS signaling and content with multicast gateways. The eMBMS signaling includes the enhanced content delivery metadata described herein. When executed by processing circuitry 604, LTE module 612 directs circuitry 604 to exchange LTE signaling with LTE systems, such as eNodeBs, mobility management entities, gateways, and the like. When executed by processing circuitry 604, CDNI module 613 directs circuitry 604 to exchange CDNI signaling with CDNs. The CDNI signaling includes the enhanced content delivery metadata described herein.

## Claims

1. A method of operating a wireless communication network (100) comprising receiving network-hosted media content (124, 125, 126) and device-hosted media content (121, 122, 123), and wirelessly multicasting the network-hosted media content (124, 125, 126) and the device-hosted media content (121, 122, 123) from the wireless communication network (100), the method **characterized by**:
wirelessly receiving device-hosted content delivery data structures (111, 112, 113) that identify the device-hosted media content (121, 122, 123) from wireless communication devices (101, 102, 103) and transferring the device-hosted content delivery data structures (111, 112, 113) for delivery to a content distribution network (151, 152, 153);
receiving network-hosted content delivery data structures (114, 115, 116) transferred from the content distribution network (151, 152, 153) indicating network-hosted media content (124, 125, 126) and the device-hosted media content (121, 122, 123) and real-time data-rates for the network-hosted media content (124, 125, 126) and the device-hosted media content (121, 122, 123), wherein the real-time data-rates indicate data transfer speeds required for real-time content consumption; and
wirelessly transferring the network-hosted content delivery data structures (114, 115, 116) from the wireless communication network (100).

2. The method of claim 1 wherein receiving and transferring the device-hosted content delivery data structures (111, 112, 113) comprises receiving and transferring the device-hosted content delivery data structures (111, 112, 113) that identify the real-time data-transfer rates for the device-hosted media content (121, 122, 123).

3. The method of claim 1 wherein receiving and transferring the network-hosted content delivery data structures (114, 115, 116) comprises receiving and transferring the network-hosted content delivery data structures (114, 115, 116) that identify media resource consumption indicators for the network-hosted media content (124, 125, 126) and the device-hosted media content (121, 122, 123).

4. The method of claim 3 wherein receiving and transferring the device-hosted content delivery data structures (111, 112, 113) comprises receiving and transferring the device-hosted content delivery data structures (111, 112, 113) that identify the media resource consumption indicators for the device-hosted media content (121, 122, 123).

5. The method of claim 1 wherein receiving and transferring the network-hosted content delivery data structures (114, 115, 116) comprises receiving and transferring the network-hosted content delivery data structures (114, 115, 116) that identify content-source priority indicators for the network-hosted media content (124, 125, 126) and the device-hosted media content (121, 122, 123).

6. The method of claim 5 wherein receiving and transferring the device-hosted content delivery data structures (111, 112, 113) comprises receiving and transferring the device-hosted content delivery data structures (111, 112, 113) that identify the content-source priority indicators for the device-hosted media content (121, 122, 123).

7. The method of claim 1 wherein receiving and transferring the network-hosted content delivery data structures (114, 115, 116) comprises receiving and transferring the network-hosted content delivery data structures (114, 115, 116) that identify content data-transfer rates and associated rate-requirement indicators for the network-hosted media content (124, 125, 126) and the device-hosted media content (121, 122, 123).

8. The method of claim 7 wherein receiving and transferring the device-hosted content delivery data structures (111, 112, 113) comprises receiving and transferring the device-hosted content delivery data structures (111, 112, 113) that identify the content data-transfer rates and associated rate-requirement indicators for the device-hosted media content (121, 122, 123).

9. A wireless communication system (100) comprising wireless access systems (137) and a content delivery interface (138), the content delivery interface (138) configured to receive the network-hosted media content (124, 125, 126) and the wireless access systems (137) configured to wirelessly receive the device-hosted media content (121, 122, 123) and wirelessly multicast the network-hosted media content (124, 125, 126) and the device-hosted media content (121, 122, 123), the wireless communication system (100) **characterized by**:
the wireless access systems (137) configured to wirelessly receive device-hosted content delivery data structures (111, 112, 113) that identify device-hosted media content (121, 122, 123) from wireless communication devices (101, 102, 103);
the content delivery interface (138) configured to transfer the device-hosted content delivery data structures (111, 112, 113) for delivery to a content distribution network (151, 152, 153), receive network-hosted content delivery data structures (114, 115, 116) transferred from the content distribution network (151, 152, 153) indicating network-hosted media content (124, 125, 126) and the device-hosted media content (121, 122, 123) and real-time data-rates for the network-hosted media content (124, 125, 126) and the device-hosted media content (121, 122, 123), wherein the real-time data-rates indicate data transfer speeds required for real-time content consumption; and
the wireless access systems (137) are configured to wirelessly transfer the network-hosted content delivery data structures (114, 115, 116).

10. The wireless communication system of claim 9 wherein the device-hosted content delivery data structures (111, 112, 113) identify the real-time data-transfer rates for the device-hosted media content (121, 122, 123).

11. The wireless communication system of claim 9 wherein the network-hosted content delivery data structures (114, 115, 116) identify media resource consumption indicators for the network-hosted media content (124, 125, 126) and the device-hosted media content (121, 122, 123).

12. The wireless communication system of claim 11 wherein the device-hosted content delivery data structures (111, 112, 113) identify the media-resource consumption indicators for the device-hosted media content (121, 122, 123).

13. The wireless communication system of claim 9 wherein the network-hosted content delivery data structures (114, 115, 116) identify content-source priority indicators for the network-hosted media content (124, 125, 126) and the device-hosted media content (121, 122, 123).

14. The wireless communication system of claim 13 wherein the device-hosted content delivery data structures (111, 112, 113) identify the content-source priority indicators for the device-hosted media content (121, 122, 123).

15. The wireless communication system of claim 11 wherein the network-hosted content delivery data structures (114, 115, 116) identify content data-transfer rates and associated rate-requirement indicators for the network-hosted media content (124, 125, 126) and the device-hosted media content (121, 122, 123).

## Patentansprüche

1. Verfahren zum Betreiben eines Drahtloskommunikationsnetzes (100), welches Empfangen von netzseitig gehostetem Medieninhalt (124, 125, 126) und von vorrichtungsseitig gehostetem Medieninhalt (121, 122, 123) und drahtloses Multicasten des netzseitig gehosteten Medieninhalts (124, 125, 126) und des vorrichtungsseitig gehosteten Medieninhalts (121, 122, 123) von dem Drahtloskommunikationsnetz (100) umfasst, wobei das Verfahren durch Folgendes gekennzeichnet ist:
drahtloses Empfangen von vorrichtungsseitig gehosteten Inhaltslieferungsdatenstrukturen (111, 112, 113), die den vorrichtungsseitig gehosteten Medieninhalt (121, 122, 123) von Drahtloskommunikationsvorrichtungen (101, 102, 103) identifizieren und die vorrichtungsseitig gehosteten Inhaltslieferungsdatenstrukturen (111, 112, 113) zur Lieferung an ein Inhaltsverteilungsnetz (151, 152, 153) übertragen;
Empfangen von netzseitig gehosteten Inhaltslieferungsdatenstrukturen (114, 115, 116), die von dem Inhaltsverteilungsnetz (151, 152, 153) übertragen werden und die netzseitig gehosteten Medieninhalt (124, 125, 126) und den vorrichtungsseitig gehosteten Medieninhalt (121, 122, 123) und Echtzeitdatenraten für den netzseitig gehosteten Medieninhalt (124, 125, 126) und den vorrichtungsseitig gehosteten Medieninhalt (121, 122, 123) angeben, wobei die Echtzeitdatenraten Datenübertragungsgeschwindigkeiten angeben, die für Echtzeitinhaltsverbrauch notwendig sind; und
drahtloses Übertragen der netzseitig gehosteten Inhaltslieferungsdatenstrukturen (114, 115, 116) von dem Drahtloskommunikationsnetz (100).

2. Verfahren nach Anspruch 1, wobei Empfangen und Übertragen der vorrichtungsseitig gehosteten Inhaltslieferungsdatenstrukturen (111, 112, 113) Empfangen und Übertragen der vorrichtungsseitig gehosteten Inhaltslieferungsdatenstrukturen (111, 112, 113), die die Echtzeitdatenübertragungsraten für den vorrichtungsseitig gehosteten Medieninhalt (121, 122, 123) identifizieren, umfassen.

3. Verfahren nach Anspruch 1, wobei Empfangen und Übertragen der netzseitig gehosteten Inhaltslieferungsdatenstrukturen (114, 115, 116) Empfangen und Übertragen der netzseitig gehosteten Inhaltslieferungsdatenstrukturen (114, 115, 116), die Medienressourcenverbrauchsindikatoren für den netzseitig gehosteten Medieninhalt (124, 125, 126) und den vorrichtungsseitig gehosteten Medieninhalt (121,122,123) identifizieren, umfassen.

4. Verfahren nach Anspruch 3, wobei Empfangen und Übertragen der vorrichtungsseitig gehosteten Inhaltslieferungsdatenstrukturen (111, 112, 113) Empfangen und Übertragen der vorrichtungsseitig gehosteten Inhaltslieferungsdatenstrukturen (111, 112, 113), die Medienressourcenverbrauchsindikatoren für den vorrichtungsseitig gehosteten Medieninhalt (121, 122, 123) identifizieren, umfassen.

5. Verfahren nach Anspruch 1, wobei Empfangen und Übertragen der netzseitig gehosteten Inhaltslieferungsdatenstrukturen (114, 115, 116) Empfangen und Übertragen der netzseitig gehosteten Inhaltslieferungsdatenstrukturen (114, 115, 116), die Inhaltsquellenprioritätsindikatoren für den netzseitig gehosteten Medieninhalt (124, 125, 126) und den vorrichtungsseitig gehosteten Medieninhalt (121, 122, 123) identifizieren, umfassen.

6. Verfahren nach Anspruch 5, wobei Empfangen und Übertragen der vorrichtungsseitig gehosteten Inhaltslieferungsdatenstrukturen (111, 112, 113) Empfangen und Übertragen der vorrichtungsseitig gehosteten Inhaltslieferungsdatenstrukturen (111, 112, 113), die die Inhaltsquellenprioritätsindikatoren für den vorrichtungsseitig gehosteten Medieninhalt (121, 122, 123) identifizieren, umfassen.

7. Verfahren nach Anspruch 1, wobei Empfangen und Übertragen der netzseitig gehosteten Inhaltslieferungsdatenstrukturen (114, 115, 116) Empfangen und Übertragen der netzseitig gehosteten Inhaltslieferungsdatenstrukturen (114, 115, 116), die Inhaltsdatenübertragungsraten und assoziierte Ratenanforderungsindikatoren für den netzseitig gehosteten Medieninhalt (124, 125, 126) und den vorrichtungsseitig gehosteten Medieninhalt (121, 122, 123) identifizieren, umfassen.

8. Verfahren nach Anspruch 7, wobei Empfangen und Übertragen der vorrichtungsseitig gehosteten Inhaltslieferungsdatenstrukturen (111, 112, 113) Empfangen und Übertragen der vorrichtungsseitig gehosteten Inhaltslieferungsdatenstrukturen (111, 112, 113), die die Inhaltsdatenübertragungsraten und assoziierte Ratenanforderungsindikatoren für den vorrichtungsseitig gehosteten Medieninhalt (121, 122, 123) identifizieren, umfassen.

9. Drahtloskommunikationssystem (100), das Drahtloszugriffssysteme (137) und eine Inhaltslieferungsschnittstelle (138) umfasst, wobei die Inhaltslieferungsschnittstelle (138) zum Empfangen des netzseitig gehosteten Medieninhalts (124, 125, 126) konfiguriert ist und die Drahtloszugriffssysteme (137) zum drahtlosen Empfangen des vorrichtungsseitig gehosteten Medieninhalts (121, 122, 123) und zum drahtlosen Multicasten des netzseitig gehosteten Medieninhalts (124, 125, 126) und des vorrichtungsseitig gehosteten Medieninhalts (121, 122, 123) konfiguriert ist, wobei das Drahtloskommunikationssystem (100) durch Folgendes gekennzeichnet ist:
die Drahtloszugriffssysteme (137), die zum drahtlosen Empfangen von vorrichtungsseitig gehosteten Inhaltslieferungsdatenstrukturen (111, 112, 113), die vorrichtungsseitig gehosteten Medieninhalt (121, 122, 123) von Drahtloskommunikationsvorrichtungen (101, 102, 103) identifizieren, konfiguriert sind;
die Inhaltslieferungsschnittstelle (138), die zum Übertragen der vorrichtungsseitig gehosteten Inhaltslieferungsdatenstrukturen (111, 112, 113) zur Lieferung an ein Inhaltsverteilungsnetz (151, 152, 153), zum Empfangen von netzseitig gehosteten Inhaltslieferungsdatenstrukturen (114, 115, 116) konfiguriert ist, die von dem Inhaltsverteilungsnetz (151, 152, 153) übertragen werden und die den netzseitig gehosteten Medieninhalt (124, 125, 126) und den vorrichtungsseitig gehosteten Medieninhalt (121, 122, 123) und Echtzeitdatenraten für den netzseitig gehosteten Medieninhalt (124, 125, 126) und den vorrichtungsseitig gehosteten Medieninhalt (121, 122, 123) angeben, wobei die Echtzeitdatenraten Datenübertragungsgeschwindigkeiten angeben, die für Echtzeitinhaltsverbrauch notwendig sind; und
die Drahtloszugriffssysteme (137), die zum drahtlosen Übertragen der netzseitig gehosteten Inhaltslieferungsdatenstrukturen (114, 115, 116) konfiguriert sind.

10. Drahtloskommunikationssystem nach Anspruch 9, wobei die vorrichtungsseitig gehosteten Inhaltslieferungsdatenstrukturen (111, 112, 113) die Echtzeitdatenübertragungsraten für den vorrichtungsseitig gehosteten Medieninhalt (121, 122,123) identifizieren.

11. Drahtloskommunikationssystem nach Anspruch 9, wobei die netzseitig gehosteten Inhaltslieferungsdatenstrukturen (114, 115, 116) Medienressourcenverbrauchsindikatoren für den netzseitig gehosteten Medieninhalt (124, 125, 126) und den vorrichtungsseitig gehosteten Medieninhalt (121, 122,123) identifizieren.

12. Drahtloskommunikationssystem nach Anspruch 11, wobei die vorrichtungsseitig gehosteten Inhaltslieferungsdatenstrukturen (111, 112, 113) die Medienressourcenverbrauchsindikatoren für den vorrichtungsseitig gehosteten Medieninhalt (121, 122,123) identifizieren.

13. Drahtloskommunikationssystem nach Anspruch 9, wobei die netzseitig gehosteten Inhaltslieferungsdatenstrukturen (114, 115, 116) Inhaltsquellenprioritätsindikatoren für den netzseitig gehosteten Medieninhalt (124, 125, 126) und den vorrichtungsseitig gehosteten Medieninhalt (121, 122,123) identifizieren.

14. Drahtloskommunikationssystem nach Anspruch 13, wobei die vorrichtungsseitig gehosteten Inhaltslieferungsdatenstrukturen (111, 112, 113) die Inhaltsquellenprioritätsindikatoren für den vorrichtungsseitig gehosteten Medieninhalt (121, 122,123) identifizieren.

15. Drahtloskommunikationssystem nach Anspruch 11, wobei die netzseitig gehosteten Inhaltslieferungsdatenstrukturen (114, 115, 116) Inhaltsdatenübertragungsraten und assoziierte Ratenanforderungsindikatoren für den netzseitig gehosteten Medieninhalt (124, 125, 126) und den vorrichtungsseitig gehosteten Medieninhalt (121, 122,123) identifizieren.

## Revendications

1. Procédé de fonctionnement d'un réseau de communication sans fil (100) comprenant la réception d'un contenu multimédia hébergé en réseau (124, 125, 126) et un contenu multimédia hébergé par un dispositif (121, 122, 123), et la multidiffusion sans fil du contenu multimédia hébergé en réseau (124, 125, 126) et du contenu multimédia hébergé par le dispositif (121, 122, 123) à partir du réseau de communication sans fil (100), le procédé étant **caractérisé par** :
la réception sans fil de structures de données de distribution de contenu hébergées par un dispositif (111, 112, 113) qui identifient le contenu multimédia hébergé par le dispositif (121, 122, 123) à partir de dispositifs de communication sans fil (101, 102, 103) et le transfert des structures de données de distribution de contenu hébergées sur un dispositif (111, 112, 113) pour une distribution à un réseau de distribution de contenu (151, 152, 153) ;
la réception de structures de données de distribution de contenu hébergées sur un réseau (114, 115, 116) transférées à partir du réseau de distribution de contenu (151, 152, 153) indiquant le contenu multimédia hébergé par le réseau (124, 125, 126) et le contenu multimédia hébergé par le dispositif (121, 122, 123) et des débits de données en temps réel pour le contenu multimédia hébergé en réseau (124, 125, 126) et le contenu multimédia hébergé par le dispositif (121, 122, 123), le débit de données en temps réel indiquant des vitesses de transfert de données requises pour une consommation de contenu en temps réel ; et
le transfert sans fil des structures de données de distribution de contenu hébergées sur le réseau (114, 115, 116) à partir du réseau de communication sans fil (100).

2. Procédé selon la revendication 1, dans lequel la réception et le transfert des structures de données de distribution de contenu hébergées par un dispositif (111, 112, 113) comprennent la réception et le transfert des structures de données de distribution de contenu hébergées par un dispositif (111, 112, 113) qui identifient les débits de transfert de données en temps réel pour le contenu multimédia hébergé par le dispositif (121, 122, 123).

3. Procédé selon la revendication 1, dans lequel la réception et le transfert des structures de données de distribution de contenu hébergées sur le réseau (114, 115, 116) comprennent la réception et le transfert des structures de données de distribution de contenu hébergées sur le réseau (114, 115, 116) qui identifient des indicateurs de consommation de ressources multimédias pour le contenu multimédia hébergé par le réseau (124, 125, 126) et le contenu multimédia hébergé par le dispositif (121, 122, 123).

4. Procédé selon la revendication 3, dans lequel la réception et le transfert des structures de données de distribution de contenu hébergées sur un dispositif (111, 112, 113) comprennent la réception et le transfert des structures de données de distribution de contenu hébergées par un dispositif (111, 112, 113) qui identifient les indicateurs de consommation de ressources multimédias pour le contenu multimédia hébergé par le dispositif (121, 122, 123).

5. Procédé selon la revendication 1, dans lequel la réception et le transfert des structures de données de distribution de contenu hébergées sur le réseau (114, 115, 116) comprennent la réception et le transfert des structures de données de distribution de contenu hébergées sur le réseau (114, 115, 116) qui identifient des indicateurs de priorité de source de contenu pour le contenu multimédia hébergé en réseau (124, 125, 126) et le contenu multimédia hébergé par le dispositif (121, 122, 123).

6. Procédé selon la revendication 5, dans lequel la réception et le transfert des structures de données de distribution de contenu hébergées par un dispositif (111, 112, 113) comprennent la réception et le transfert des structures de données de distribution de contenu hébergées par un dispositif (111, 112, 113) qui identifient les indicateurs de priorité de source de contenu pour le contenu multimédia hébergé par le dispositif (121, 122, 123).

7. Procédé selon la revendication 1, dans lequel la réception et le transfert des structures de données de distribution de contenu hébergées sur un réseau (114, 115, 116) comprennent la réception et le transfert des structures de données de distribution de contenu hébergées sur le réseau (114, 115, 116) qui identifient des taux de transfert de données de contenu et des indicateurs de besoin de débit associés pour le contenu multimédia hébergé par le réseau (124, 125, 126) et le contenu multimédia hébergé par le dispositif (121, 122, 123) .

8. Procédé selon la revendication 7 dans lequel la réception et le transfert des structures de données de distribution de contenu hébergées sur un dispositif (111, 112, 113) comprennent la réception et le transfert des structures de données de distribution de contenu hébergées par un dispositif (111, 112, 113) qui identifient les taux de transfert de données de contenu et les indicateurs de besoin de débit associés pour le contenu multimédia hébergé par le dispositif (121, 122, 123).

9. Système de communication sans fil (100) comprenant des systèmes d'accès sans fil (137) et une interface de distribution de contenu (138), l'interface de distribution de contenu (138) étant configurée pour recevoir le contenu multimédia hébergé en réseau (124, 125, 126), et les systèmes d'accès sans fil (137) étant configurés pour recevoir sans fil le contenu multimédia hébergé par le dispositif (121, 122, 123) et pour diffuser sans fil le contenu multimédia hébergé par le réseau (124, 125, 126) et le contenu multimédia hébergé par le dispositif (121, 122, 123), le système de communication sans fil (100) étant **caractérisé par** :
les systèmes d'accès sans fil (137) configurés pour recevoir sans fil des structures de données de distribution de contenu hébergées par un dispositif (111, 112, 113) qui identifient un contenu multimédia hébergé par un dispositif (121, 122, 123) à partir de dispositifs de communication sans fil (101, 102, 103) ;
l'interface de distribution de contenu (138) configurée pour transférer les structures de données de distribution de contenu hébergées sur un dispositif (111, 112, 113) pour une distribution à un réseau de distribution de contenu (151, 152, 153), recevoir des structures de données de distribution de contenu hébergées en réseau (114, 115, 116) transférées à partir du réseau de distribution de contenu (151, 152, 153) indiquant un contenu multimédia hébergé sur le réseau (124, 125, 126) et le contenu multimédia hébergé par le dispositif (121, 122, 123) et des débits de données en temps réel pour le contenu multimédia hébergé sur le réseau (124, 125, 126) et le contenu multimédia hébergé par le dispositif (121, 122, 123), les débits de données en temps réel indiquant des vitesses de transfert de données requises pour une consommation de contenu en temps réel ; et
les systèmes d'accès sans fil (137) configurés pour transférer sans fil les structures de données de distribution de contenu hébergées en réseau (114, 115, 116) .

10. Système de communication sans fil selon la revendication 9, dans lequel les structures de données de distribution de contenu hébergées par un dispositif (111, 112, 113) identifient les débits de transfert de données en temps réel pour le contenu multimédia hébergé par le dispositif (121, 122, 123).

11. Système de communication sans fil selon la revendication 9, dans lequel les structures de données de distribution de contenu hébergées en réseau (114, 115, 116) identifient des indicateurs de consommation de ressources multimédias pour le contenu multimédia hébergé par le réseau (124, 125, 126) et le contenu multimédia hébergé par le dispositif (121, 122, 123).

12. Système de communication sans fil selon la revendication 11, dans lequel les structures de données de distribution de contenu hébergées par un dispositif (111, 112, 113) identifient les indicateurs de consommation de ressources multimédias pour le contenu multimédia hébergé par le dispositif (121, 122, 123) .

13. Système de communication sans fil selon la revendication 9, dans lequel les structures de données de distribution de contenu hébergées en réseau (114, 115, 116) identifient des indicateurs de priorité de source de contenu pour le contenu multimédia hébergé par le réseau (124, 125, 126) et le contenu multimédia hébergé par le dispositif (121, 122, 123).

14. Système de communication sans fil selon la revendication 13, dans lequel les structures de données de distribution de contenu hébergées par un dispositif (111, 112, 113) identifient les indicateurs de priorité de source de contenu pour le contenu multimédia hébergé par le dispositif (121, 122, 123).

15. Système de communication sans fil selon la revendication 11, dans lequel les structures de données de distribution de contenu hébergées en réseau (114, 115, 116) identifient des taux de transfert de données de contenu et des indicateurs de besoin de débit associés pour le contenu multimédia hébergé par le réseau (124, 125, 126) et le contenu multimédia hébergé par le dispositif (121, 122, 123).
